Europäisches Patentamt

European Patent Office

Office européen des brevets

(19)

(11) Publication number: **0 077 141**
**B1**

(12) **EUROPEAN PATENT SPECIFICATION**

(45) Date of publication of patent specification: **28.05.86**

(51) Int. Cl.⁴: **A 01 D 59/04**

(21) Application number: **82305078.6**

(22) Date of filing: **27.09.82**

(54) Knotters.

(30) Priority: **07.10.81 GB 8130247**

(43) Date of publication of application:
**20.04.83 Bulletin 83/16**

(45) Publication of the grant of the patent:
**28.05.86 Bulletin 86/22**

(84) Designated Contracting States:
**DE FR GB IT**

(56) References cited:
**DE-C- 434 822**
**GB-A-2 051 888**
**GB-A-2 081 312**

(73) Proprietor: **SPERRY N.V.**
**Leon Claeysstraat 3a**
**B-8210 Zedelgem (BE)**

(72) Inventor: **Vansteelant, Marc Georges**
**Groenestraat 61**
**B-8210 Zedelgem (BE)**

(74) Representative: **Singleton, Jeffrey et al**
**ERIC POTTER & CLARKSON 27 South Street**
**Reading Berkshire, RG1 4QU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to knotters, i.e. mechanisms for tying knots, for any applications but for convenience, the invention will be discussed in relation to agricultural baling machines in which bales of hay or straw, for example, are formed and secured by flexible material in which knots are tied by a knotter.

In conventional hay balers, hay, straw and similar crop material that has been previously cut, windrowed, or swathed, is picked up from the ground by a pick-up unit and fed in successive batches or charges into an elongated bale chamber in timed sequence with a reciprocating plunger. The plunger compresses the material into bales and at the same time gradually advances the bales towards the outlet of the bale chamber. As the bales reach a predetermined length as determined by a metering device, a knotter is actuated which wraps cord, twine or other flexible tie material around the bale and secures the ends of the tie material together.

In a typical baler a knotter is mounted on the bale chamber above a slot therein, the knotter comprising a twine holder from which twine extends to encircle a bale. During the baling operation, the leading strand of twine is held by the twine holder and extends forwardly across a twine retainer finger and a billhook and then in front of the bale. The twine retainer finger supports the strand so that it does not bear forcefully against the billhook. A needle is involved in completing the encirclement of twine around the bale and, when advancing, the needle lays a trailing strand across the twine retainer finger, billhook and twine holder. A twine finger captures these strands of twine and positively positions the strands against the heel of the billhook.

Thus, there are presented in a certain zone a pair of twine portions or strands lying alongside each other and these portions are twisted into a bight by the billhook and a portion thereof is partially pulled through the bight to form a bow knot. On completion of the operation of the knotter, the twine finger returns to the initial position. The removal of the tied knot from the billhook involves mechanical stripping by a movable member which normally embodies a knife operable to cut the twine from the twine supply so that the tied bale is complete in itself. The tying mechanism thus includes several components working in a precisely timed relationship so that theoretically the mechanism ties one knot for each bale and prepares the twine for the succeeding bale.

An improved knotter is disclosed in British Patent Specification No. 1,600,417 and in co-pending British Patent Application GB—A—2081312 and has been found to exhibit exceptional structural simplicity and highly reliable operational characteristics. However, this improved knotter occasionally gives rise to a knot mistie due to the strands of twine entering between the jaws of the billhook prematurely. In the operation of this improved knotter the billhook rotates through a first cycle and a second cycle during a knot-tying operation and the arrangement is such that the jaws of the billhook are opened at a given point in each cycle even though the strands of twine are only required to enter between the jaws during the second cycle. This dual opening of the billhook jaws for each knot-tying operation was not considered to impair the operation of the knotter since the opening during the first cycle, albeit unnecessary, should have no adverse effect. During the first cycle of the knot-tying operation, the twine is pushed off a guide member and it has been found that from time to time the twine jumps from the guide member into the open jaws of the billhook, thus giving rise to a knot mistie. Such an occurrence is relatively rare but it is very desirable to eliminate all misties and the object of the present invention is to prevent misties due to the premature placement of the twine between the jaws of the billhook.

According to the present invention a knotter comprises a twine holder operable to hold, during a knot-tying operation, a primary portion and a secondary portion of twine in which the knot is to be tied; a rotary billhook rotatable about an axis to which it is inclined and being rotatable through a first and a second revolution during the knot-tying operation, the billhook being operable, during the first revolution, to position the primary and secondary portions of twine relative to each other in preparation for the knot to be tied therein and operable, during the second revolution, to tie the knot in the primary and secondary portions, the billhook comprising two jaws capable of being opened and closed; and rotatable cam means contactable by the billhook during both the first and second revolutions, characterised in that the cam means comprise a first contact surface and a second contact surface contactable by the billhook during the first and second billhook revolutions, respectively, and the arrangement being such that when the first contact surface is contacted by the billhook during the first billhook revolution, the jaws of the latter remain closed and the cam means are moved into a position ready for the second contact surface to be contacted by the billhook during the second billhook revolution, and, when the second contact surface is contacted by the billhook during the second billhook revolution, the jaws of the latter are opened and the cam means are moved into the position ready for the first contact surrace to be contacted by the billhook during the first billhook revolution of the subsequent knot-tying operation. The cam means may be mounted for rotation about an axis offset from the billhook axis, and the first contact surface of the cam means spaced at a shorter distance from the axis of rotation of the cam means than the second contact surface.

Preferably the cam contactable by the billhook is generally square in plan view with one pair of opposed corners cut away such that, when either of the sections of the cam at these cut-way corners is contacted by the billhook, the jaws of the latter remain closed, and with the other pair of opposed corners arranged such that when either of them is contacted by the billhook, the jaws of the latter are opened. The arrangement is further such that, any time the cam is contacted by the billhook, the cam is rotated through 90°. The section of the cam at each cut-away corner has a working surface which may be formed with a recess or be generally concave to accommodate movement of the billhook relative to the cam without effecting any movement of the billhook jaws relative to each other. The other pair of opposed corners of the cam may be formed with a recess positively to locate the contacting portion of the billhook to ensure opening of the billhook jaws and rotation of the cam through 90°.

Preferably locking means are provided to lock the cam against rotation at least during portions of the first and second revolutions of billhook rotation. The locking means may be rendered operative immediately after the billhook has effected rotation of the cam to ensure that the inertia of the latter does not carry it to other than the desired position which would result in knotter malfunction. The locking means may comprise interactive extensions on the billhook and on the cam, respectively.

An agricultural baler embodying the present invention will now be described in greater detail, by way of example, with reference to the accompanying drawings, in which:

Figure 1 is a top view illustrating a baler including two knotters according to the invention,

Figure 2 is a sectional view taken along the line II—II of Figure 1,

Figure 3 is a view of one knotter taken in the direction of the billhook shaft thereof,

Figure 4 is a part sectional view taken along the line IV—IV of Figure 3,

Figure 5 is a side view of a component of the knotter of Figure 3,

Figure 6 is a top view of Figure 5,

Figures 7 to 14 show different operative positions of certain components useful in explaining the operation of the present invention, and

Figure 15 is a view similar to Figure 3 of another embodiment of the invention.

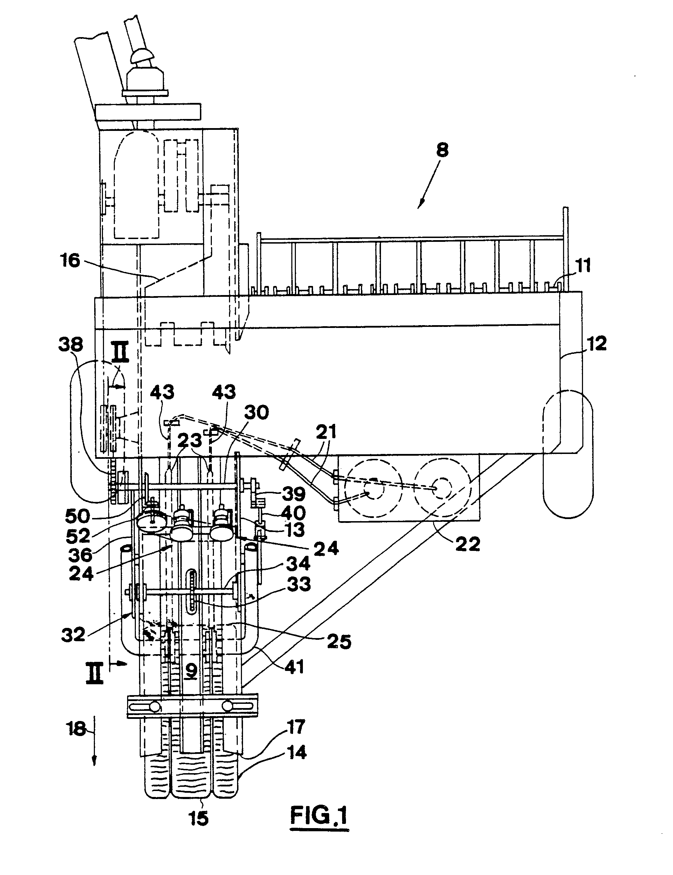

The agricultural baler, generally designated at 8 in Figure 1, comprises a wheel supported chassis upon which are mounted a pick-up mechanism 11, a feeder mechanism 12 and a bale chamber 13. As cut crop material is picked up from the ground, it is fed in successive batches or charges into the inlet of the bale chamber 13 and the batches of material are compressed into bales 14 by a reciprocating plunger 16 which also advances the bales along the chamber 13 towards an outlet 17 in the direction of arrow 18.

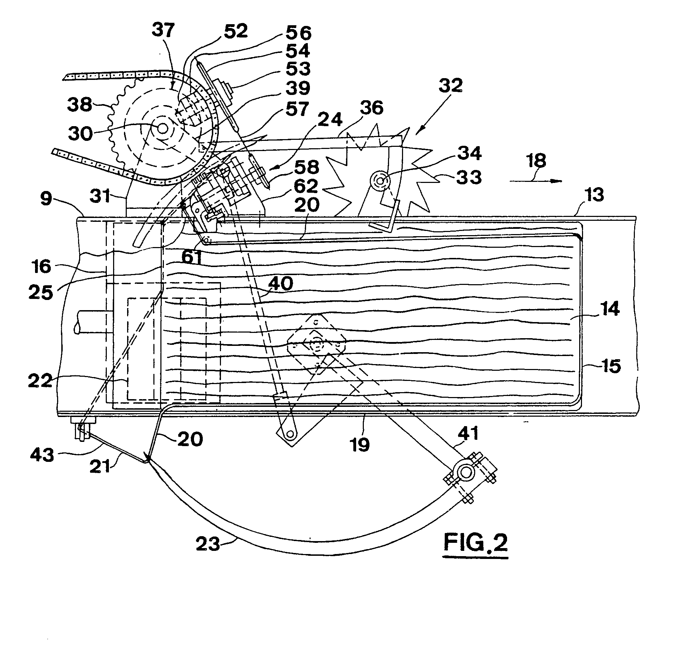

As can perhaps best be seen in Figure 2, a primary portion or length 20 of twine or other flexible tie material 21 extends across the bale chamber 13 in the path of the leading end 15 of each bale 14 from a supply reel or container 22 and passes through the eye of a needle 23 with the primary portion 20 of the twine 21 being held in a knotter 24 mounted on a top wall 9 of the bale chamber 13. The baler carries a pair of identical knotters 24 and each knotter is arranged to cooperate with a needle 23, whereby a pair of needles also has to be provided.

A main drive shaft 30 (Figures 1 and 2) is rotatably journalled in supports 31 on the upper wall of the bale chamber 13 at a distance thereabove and transversely of the bale chamber. The main drive shaft 30 is intermittently actuated by a conventional trip mechanism 32 which includes a starwheel 33 arranged to engage the bale of hay or other material as it is being formed, whereby it is rotated about a shaft 34 as the bale 14 moves along the chamber 13. The shaft 34 is operatively coupled to a trip lever 36 which itself is connected to a clutch mechanism 37 mounted on the main shaft 30. One half of the clutch mechanism 37 is driven continuously through a chain or sprocket drive transmission from an intermediate shaft on the baler, only a sprocket 38 thereof being shown in Figures 1 and 2.

As the trip mechanism actuates the clutch mechanism 37, the main shaft 30 is driven to initiate the tying of a knot by each knotter 24. The main shaft 30 has a crank arm 39 attached thereto at its end opposite to the clutch mechanism 37, the arm 39 being connected by a pitman or link 40 to a needle frame 41 which carries the pair of needles 23.

No further elaboration will be given concerning the structural details of the trip mechanism 32 and the needle frame and drive mechanism as these details are sufficiently well known in the art. Suffice it briefly to summarize the operation thereof. Upon actuation of the clutch mechanism 37, the main shaft 30 is driven, and the needles 23 move from the rest position (indicated by full lines in Figure 2) to their full throw position (shown partially in phantom lines in Figure 2) to wrap the respective twines 21 around the bottom and trailing ends 19 and 25, respectively, of the bale 14 and place the secondary portions 43 of the twines in the respective knotters 24.

Each twine 21 loops back over the needle 23 to the reel 22 in the full throw position, thereby leaving a new primary portion or length of twine 20 across the path of the next bale to be formed. As each needle 23 returns to its rest position, the ends of each primary and secondary portion 20 and 43 are twisted and tied together by the knotter 24, with the primary and secondary portions 21 and 43 being severed at the end of the tying operation. The entire knotting or tying operation takes place between successive strokes of the baler plunger 16.

The main shaft 30 also has attached thereto a single conical gear segment 50 having teeth over only about 1/3 of its circumference. The gear teeth are arranged to mesh with the teeth of a conical gear 52 which is mounted on one end of a stub shaft 53 on the other end of which is mounted a sprocket 54. The shaft 53 is journalled in a support 56. A chain 57 engages the sprocket 54 and sprockets 58 of the respective knotters 24 of which only one is seen in Figure 2.

As already stated, the two knotters 24 are identical and, therefore, only one will be described in further detail in relation to the associated needle 23 and other components. It should be noted that the general construction and operation of each knotter 24 is identical to that disclosed in the aforementioned co-pending Patent Application No. 81.19851 to which reference is made.

By way of general introduction to the knotter structure, attention is directed to the cross sectional view of Figure 4 in which the basic component parts and their interrelationships can be seen.

Each knotter 24 is mounted on the top wall 9 of the bale case 13 adjacent an elongate aperture 10 and in the vicinity of twine guide rollers 61 (Figure 4). The knotter 24 includes a base or support frame 62, a twine holder 63 rotatably mounted by a twine holder shaft 64 on the support frame 62, a billhook 66 including a hollow shaft 99 extending parallel to the twine holder shaft 64 and rotatably supported on the support frame 62, and a Geneva mechanism 67 between the billhook shaft 99 and the twine holder shaft 64.

The support frame 62 includes a generally upright member 71 carrying twin cylindrical bearing sleeves 72 and 73, respectively. The twin bearing sleeves 72, 73 comprise forward and rearward sections 44; 45 and 68; 69, respectively, spaced from each other and defining therebetween a free space. A further support member 28 is provided at a distance to the left of the forward section 44 of the twin bearing sleeve.

Each knotter 24 comprises an actual knotter mechanism or billhook, indicated generally at 66, with which is associated the hollow billhook or twister shaft 99 rotatably journalled in the sleeve sections 44, 45 of the lower bearing sleeve 72. The twister shaft 99 supports at one end the associated driving sprocket 58. The billhook 66 comprises a fixed jaw 75 inclined at about 90 degrees to the end of the twister shaft 99 opposite to the sprocket 58 and adjacent a twine holder of the knotter which is generally indicated at 63. In the rest position, the billhook 66 projects downwardly towards and partially through the aperture 10 in the top wall 9 of the bale chamber 13 (as can be seen in Figure 4).

At the side facing the twister shaft 99, the fixed jaw 75 comprises an elongated groove or recess 77 for receiving a crochet hook 65 of a movable jaw 78 of the billhook 66. At the junction of the fixed jaw 75 and the twister shaft 99, the fixed jaw 75 is provided with an elongated slot through which the movable jaw 78 extends and in which it is pivotally mounted by a pivot pin 80.

The movable jaw 78 has a heel portion 81 at one end and further comprises a recess or notch 84 in the side opposite to the fixed jaw 75 at a location slightly offset relative to the pivot 80. A mechanism for spring loading the movable jaw 78 is provided inside the hollow twister shaft 99 whereby the jaw is urged to the closed position. Referring to Figure 4, this mechanism comprises a spring 85 inserted in the hollow shaft 99 and abutting at one end against the end of the bore and at the other end against an abutment member 86. The abutment member 86 has an angled end adapted for engagement with the notch or recess 84 in the movable jaw.

The twister shaft 99 carries intermediate the sleeve sections 44, 45 of the twister shaft bearing sleeve 72 one half of the Geneva drive mechanism 67 which is intended for driving the twine holder 63. This Geneva drive mechanism is described in greater detail in co-pending Patent Application No. 81.19851.

The twine holder 63 itself comprises four generally triangularly shaped flanges or discs 90, 91, 92 and 93 which are spaced from each other to define respective slots or grooves 87, 88 and 89 of varying depth. The flanges comprise V-shaped recesses or notches 100. The recesses 100 have a smaller depth than the gooves 87, 88 and 89 between the adjacent flanges 90, 91, 92 and 93 at the location where the recesses 100 are provided.

The flanges or discs 90, 91, 92 and 93 are welded or otherwise secured to the twine holder shaft 64 in a manner so that they extend parallel to each other with recesses 100 aligned with each other in the direction of the twine holder shaft 64. Thus the recesses 100 in the adjacent flanges 90 to 93 define three grooves 102, 103 and 104 which are oriented parallel to the twine holder shaft 64.

The fixed jaw 75 of the billhook 66 is dimensioned and positioned relative to the twine holder flanges 90 to 93 so that upon rotation, the fixed jaw 75 moves in front of the twine holder 63 whereby, as seen in the direction of the billhook shaft 99, the plane described by the billhook 66 substantially overlaps the twine holder 63.

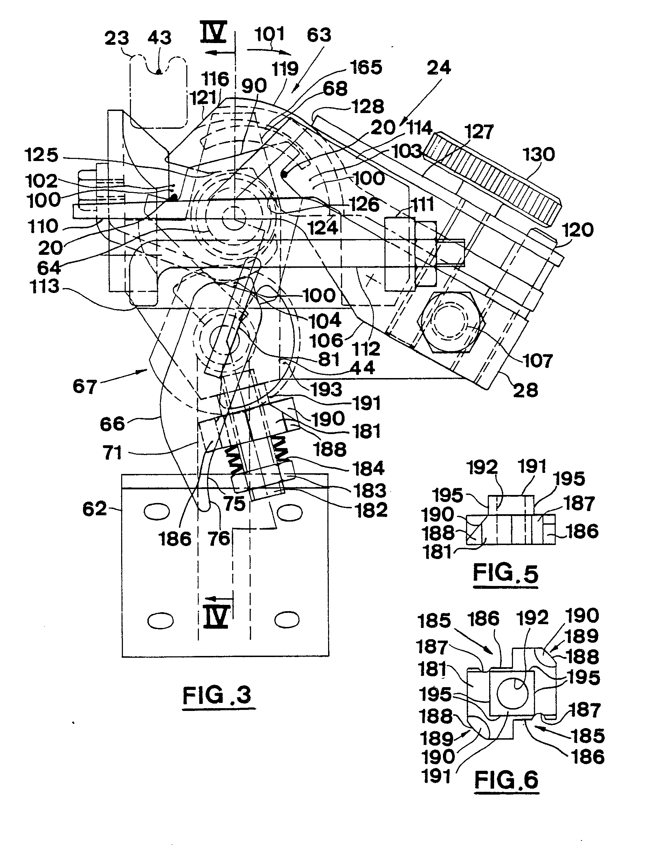

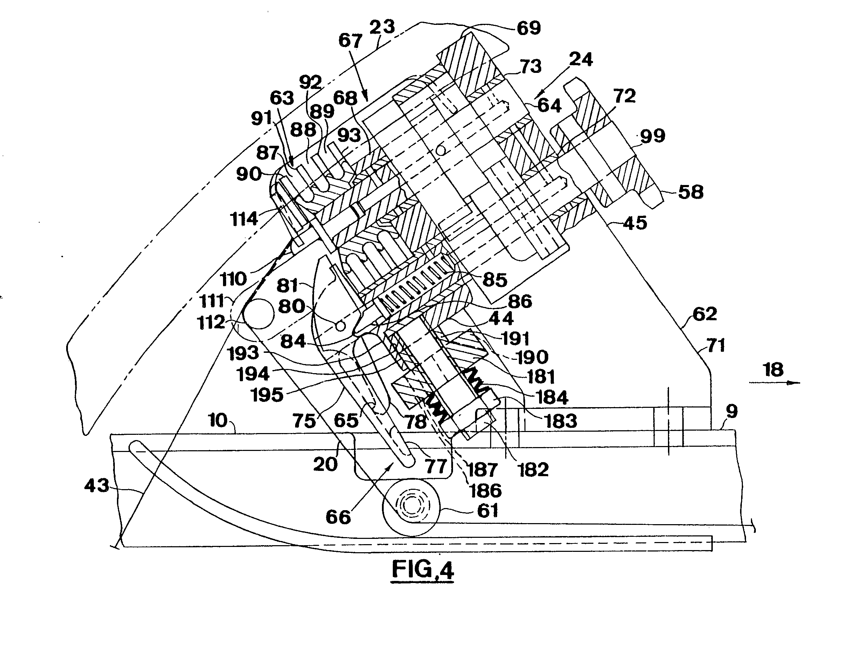

A knife arm 106 (Figure 3) for the twine holder 63 is bolted at 107 to the further support member 28 of the frame 62 and extends upwardly and sidewardly from its fixation point 107 to a location in front of the centre of the twine holder 63. The knife arm 106 is further extended to the right beyond the centre of the twine holder 63 to form at this location a first stationary twine guide 110 in front of the twine holder 63. The first stationary twine guide 110 is positioned so that the tip of the billhook 66 can pass in front thereof during rotation.

A further support member 111 projects forwardly from the knife arm 106 at a location adjacant the fixation point 107 and carries adjacent its free end a second stationary transverse twine guide 112. This second twine guide 112 is positioned slightly lower than the first twine guide 110 and also further to the front to the extent that, during operation, the billhook 66 passes between the first and second twine guides 110 and 112. This second twine guide 112 has a downwardly inclined free end 113 which is positioned inwardly of the turning circle of the tip 76 of the billhook 66 (when seen in the direction of the billhook shaft 99).

Attached to the knife arm 106 and in shearing contact with the underside of the lower twine holder flange 90 is a stationary knife 114.

Three twine retainer fingers of which only is shown at 116 in Figure 3 and which are integrally connected at one end by a mounting member 119, are pivotally mounted via the member 119 at 120 to the further support member 28 of the frame 62. The twine retainer fingers 116 extend in a transverse direction across the twine holder 63 and in part into the grooves 87, 88 and 89, respectively. The transverse mounting member 119 and the fingers 116 have an inclined edge 121 opposite the pivot, which edge acts as a twine guide, assisting in the positioning of the secondary portion 43 of the twine in the groove 102 as seen in Figure 3. The edges of the fingers 116 facing towards the twine holder 63 and extending between the flanges thereof each comprise a straight section 124 and a curved section 125, separated by a curved section 126 of a smaller radius than the section 125. The fingers 116 are resiliently urged into the grooves 87, 88 and 89 by a leaf spring 127 which also is pivotally mounted on the pivot 120 and which extends in the direction of the fingers 116 and contacts the mounting member 119 at 128.

An adjustable screw 130 mounted on the further support member 28 between the pivot 120 and the contact point 128 provides adjustment of the force exerted by the spring 127 on the twine fingers 116.

The construction of the illustrated embodiment so far described is identical to that disclosed in co-pending Patent Application GB—A—2081312. The difference between the two arrangements lies in the actuation of the jaws 75 and 78 of the billhook 66. In the present embodiment the movable jaw 78 of the billhook 66 has a heel portion 81 at one end which acts as a cam follower with respect to a cam 181 (Figures 3—6) as the twister shaft 99 is rotated. The cam 181 is mounted for rotation on a stub shaft 182 provided on the knotter frame 62 at the lower and forward end of the front sleeve section 44. A nut 183 and a cup spring 184 retain the cam 181 on the stub shaft 182 such that the cam is not freely rotatable.

Figures 5 and 6 show that the cam 181 is essentially square in plan view although two diametrically opposed corners are cut away at 185 to provide working surfaces 186 which are formed with concave recesses or channels 187 extending parallel to the longitudinal axis of the stub shaft 182. The edges of the working surfaces 186 nearest to the billhook 66 are chamfered at their outer ends. The cam 181 has two other working surfaces formed by the two opposed corners 189 which are not cut away although those corners are formed with concave recesses 190 and are rounded at 188.

An extension 191 which is square in plan view as seen in Figure 6, but of a dimension less than the basic square of the cam 181, is formed integrally with, and centrally on one side of, the latter. A bore 192 is provided through the cam 181 and extension 191 for the reception of the stub shaft 182. The extension 191 forms part of locking means which serve to lock the cam 181 against rotation at certain points during its cycles of operation as will be described. The locking means is completed by an extension 193 in the form of a sector provided on the fixed jaw 75 of the billhook 66 as seen in Figure 3.

The extension 193 extends over an arc of 155° and is rotatable with the billhook 66 about an axis which is at right angles to the axis of rotation of the cam 181. The extension 193 is offset from the axes of rotation of the cam 181 and has a flat face 194 which is engageable with one or other of the four faces 195 of the cam extension 191, the cam being locked against rotation when such engagement occurs. Since the locking effected by the components 191 and 193 is required over 270° of each revolution of the billhook 66, it might be expected that the extension 193 should extend over a similar angle. However, such an extension would interfere with the rotation of the cam 181 at the appropriate time which is why the extension 193 defines an angle of only 155°. Nevertheless, when no locking of the cam 181 is effected by the extension 193 but is ideally required, the cup spring 184 effectively prevents any inadvertent cam rotation.

Upon rotation of the main shaft 30, the needles 23 move from their rest position to their full throw position during the first 180 degrees of rotation of the main shaft. During the next 180 degrees the needles 23 are fully retracted. The conical gear segment 50 on the main shaft 30 is dimensioned and positioned so that during the first 120 and the last 120 degrees of rotation of the main shaft 30, the knotters 24 are not actuated. The knotters are driven only during the second 120 degrees of rotation of the main shaft 30, that is from the moment the needles 23 have reached the vicinity of the knotters over their full stroke position to the point where they move away from the vicinity of the knotters.

The transmission ratio between the main shaft 30 and the billhook shafts 99 is such that during the second 120 degrees of rotation of the main shaft 30, the billhooks 66 make two complete revolutions, i.e. rotate through 720 degrees. Finally, the Geneva mechanism 67 of each knotter 24 is arranged so that each billhook shaft 99 drives the twine holder shaft 64 over 60 degrees during the last quarter of each full revolution of the billhook. Thus, during one complete knotting cycle, the twine holder 63 is rotated twice through 60 degrees, i.e. in total through 120 degrees. This intermittent rotation of the twine holder 63 is thus obtained during the last 15 degrees of rotation of the main shaft 30 before the needles 23 reach their maximum stroke position and during the last 15 degrees of rotation of the main shaft 30 before the drive to the billhook 66 is interrupted.

As long as the clutch mechanism 37 is not actuated, all components of each knotter 24 are in their rest positions of Figures 3, 4 and 7. This means that the needles 23 are in their lowermost dwell position, as shown in full lines in Figure 2, whilst billhooks 66 project downwardly as seen in Figures 2, 3 and 4. As already mentioned a primary portion 20 of twine 21 extends across the bale chamber 13 in the path of the leading end 15 of the bale 14 being formed and passes through the eye of a needle 23, which the free end of the primary portion being supported in the twine holder 63 of the associated knotter 24, bearing in mind that two knotters are employed, whereby each bale 14 is bound by two pieces of twine. The free end of the primary portion 20 of the twine 21 is received in the groove 103 of the twine holder 63 at which point it is firmly held in position by the twine retainer fingers 116 between the curved sections 126 thereof with the smaller radius and the twine holder flanges 90 to 93. From the groove 103 the primary twine portion 20 extends away from the billhook 66 through components of the Geneva mechanism 67. As such, it is clear that the primary twine portion 20 extends below a fifth stationary twine guide 165. From there, the primary twine portion 20 extends downwardly in a forward direction into the next groove 102 of the twine holder 63, down across the first and second stationary twine guides 110 and 112, respectively, and finally down and around the twine guide roller 61 into the bale chamber 13. This free end of the primary portion 20 of the twine 21 is tensioned and thus forcefully bears against all the components listed above, whereby it is properly positioned relative to the billhook 66.

As a bale 14 is being formed and moved along the bale chamber 13, the starwheel 33 is rotated thereby and as the bale reaches a predetermined length, the wheel 33 actuates the clutch mechanism 37, whereupon the main shaft 30 is rotated through 360 degrees. During the first 180 degrees of rotation of the shaft 30, the needles 23 move from their lowermost rest positions to their highest, full throw, positions (phantom lines in Figure 2) along a path closely adjacent the first and second stationary guide members 110 and 112, through the twine gripping area of the twine holder 63.

During the next 180 degrees of rotation of the main shaft 30, the needles 23 are retracted and returned to their rest or dwell positions. During the initial movement over 120 degrees of the main shaft 30, the teeth 51 of the gear segment 50 are not in mesh with the teeth of the conical gear 52, whereby neither knotter 24 is operated.

During the initial movement of the shaft 30, each needle 23 carries the end of the secondary twine portion 43 from the position shown in full lines in Figure 2 around the bottom and trailing ends 19 and 25 of the bale 14 to the position shown in phantom lines in Figures 2 and 4. At that moment, the needle 23 places the secondary twine portion 43 alongside the related primary twine portion 20 against the first and second stationary guide members 110 and 112 and in the groove 102 in the twine holder 63 and in a particular relationship with the Geneva mechanism 67.

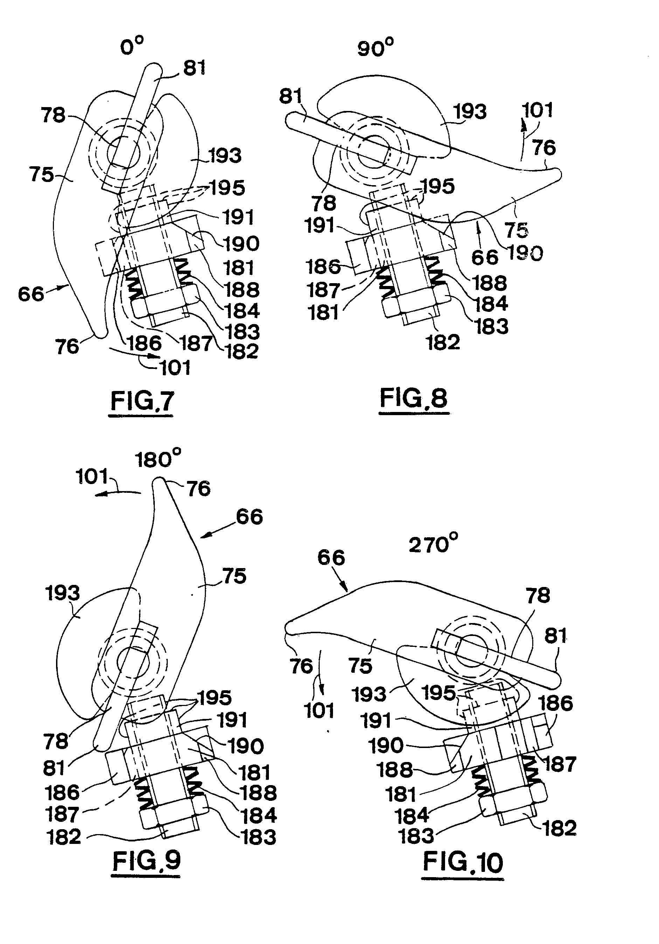

At the point in the cycle of the main shaft 30 when the gear segment 50 meshes with the conical gear 52, the billhook 66 starts rotating and by the time gear segment comes out of mesh with the conical gear, the billhook has completed two full revolutions which constitute first and second cycles of rotation. This billhook rotation is shown in 90° steps in Figures 7 to 14 which indicate the number of degrees of rotation from the rest (0°) position. Figures 7 to 14 show the billhook 66 relative to the cam 181.

In the rest position (Figure 7), the cam 181 is locked against rotation by the engagement of the billhook extension 193 with one face 195 of the cam extension 191, the billhook extending downwardly as seen in Figure 7 and clearing the cam 181 as seen in Figure 4. During the first 90° of rotation the extension 193 disengages the extension 191 so that the cam is no longer positively locked but inadvertent rotation is prevented by the cup spring 184. The cam 181 thus remains stationary and the relative positions of the billhook and cam after 90° of billhook rotation are shown in Figure 8. The cam 181 also remains stationary during the next 90° of rotation of the billhook 66 when the latter reaches the position of Figure 9 at which point the heel portion 81 of the movable billhook jaw 78 is about to engage the cam 181 which is still unlocked.

More specifically, the heel portion 81 is about to engage one of the cut-away corners 185 of the cam 181 at the associated working surface 186. In fact, the heel portion engages the recess 187 in the working surface 186 and the cut-away portion is dimensioned so as to effect no opening on the billhook jaws 75, 78 on movement of the billhook to the 270° position of Figure 10. The entire working surface 186 can be made concave rather than provide the recesses 187 therein. As it is, the profile of each working surface 186 is such as to allow a smooth, sliding contact with the billhook heel portion 81 without opening the billhook jaws. As the heel portion 81 engages the recess 187, the cam is rotated about the stub shaft 182 and as the billhook moves to the position of Figure 10, the billhook extension 193 engages the cam extension 191 along a face 195 at right angles to that which is engaged in the rest portion of Figure 7. Thus the cam 181 is rotated through 90° but is positively locked against any further rotation which means that the cam cannot be wrongly positioned giving rise to a subsequent knotter malfunction.

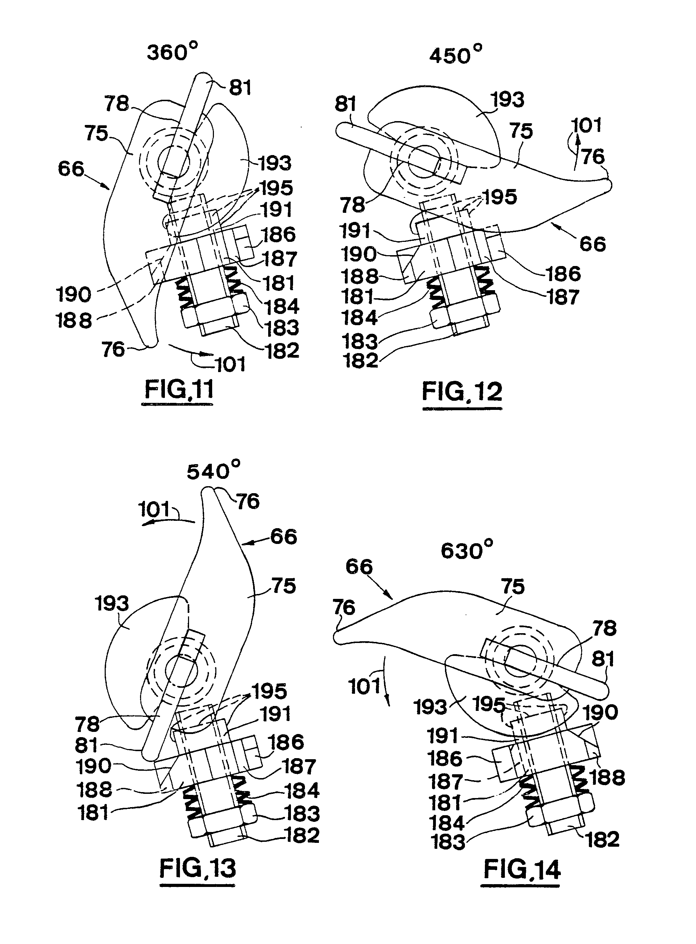

On continued rotation of the billhook from the 270° position of Figure 10 to the 360° of Figure 11 the cam 181 remains locked. On further rotation of the billhook to the 450° position of Figure 12 and then to the 540° position of Figure 13, the cam 181 is again not locked by the interaction of the extensions 191 and 193, but is merely restrained by the cup spring 184. On reaching the 540° position of Figuure 13, the heel portion 81 of the billhook movable jaw 78 is about to engage the cam 181 for the second time but on this occasion a non-cut-away corner 189 is presented to it. The heel portion 81 engages the recess 190 which provides a positive surface against which it can react. Compared with the cam engagement situation at the 180° position of Figure 9, the radius between the axis of rotation of the cam 181 and the recess 190 is larger than the radius between that axis and the working surface 186 previously engaged, whereby the heel portion 81 is moved against the action of the spring 85 in the hollow twister shaft 99 and the billhook jaws 75 and 78 are opened. It is at this point that the twine portions 20 and 43 are in a position relative to the billhook in which they can enter the open jaws 75 and 78.

The jaws 75 and 78 close once the heel portion 81 disengages the cam corner 189 referred to, i.e. as it moves to the 630° position of Figure 14. The action of the heel portion 81 on the cam surface 190 is such as to rotate the cam 181 through another 90°, the billhook extension 193 engaging the cam extension 191 so as to lock the cam in the Figure 14 position.

The cam 181 is thus positioned ready for the next knot-tying operation with a cut-away corner 185 (opposite to that engaged by the heel portion 181 on movement of the billhook from the Figure 9 to the Figure 10 position) ready for engagement by the heel portion at the next 180° position. The billhook 66 rotates through a further 90° from the Figure 14 position to complete two revolutions but this does not affect the cam position which remains locked during this movement.

Inasmuch as the billhook 66 and cam cooperate to drive the latter intermittently, these two components form a Geneva mechanism.

It should be noted that the extension 191 and 193 interact to lock the cam 181 in position immediately after it has been moved by the billhook 66. In other words each time the cam is given inertia, it is then locked in the desired position to ensure that the inertia does not carry the cam to an alternative position which would result in a malfunction of the knotter. However, when not given inertia, the cam 181 is restrained from movement by the cup spring 184 is described.

The specific details of the knot-tying operation as regards the positioning of the twine portions 20 and 43 on rotation of the billhook through two revolutions have not been described since they are identical to those given in co-pending Application No. 81.19851 referred to. The twine cutting operation and the disengagement of the tied knot from the billhook 66 have also not been described for the same reason. However, suffice it to say that during the first cycle (360°) of billhook rotation the primary and secondary portions of twine 20, 43 are positioned relative to each other in preparation for the knot-tying operation, and during the second cycle (360°) of billhook rotation the knot is tied in those twine portions.

The single occurrence of billhook jaw opening during each two revolutions of the billhook 66 entirely removes the problem of the twine portions 20 and 43 entering the billhook jaws prematurely. Also, it halves the number of times the billhook jaws 75 and 78 have to open and close which reduces significantly the wear on the pivot of the movable jaw 78. With the removal of the problem referred to by the present invention, it would be possible to dispense with the twine guide 112 which originally was provided principally to help prevent the twine entering the billhook jaws prematurely. However, it is preferred to retain the guide 112 as it has been found to serve a secondary function of providing more twine for the knot-tying operation.

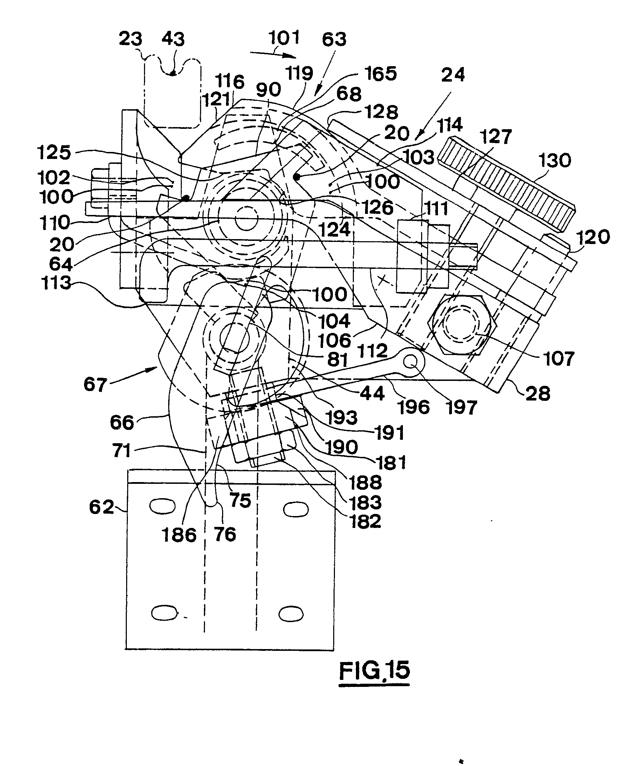

Figure 15 shows an alternative arrangement in which the cup spring 184 is replaced by a leaf spring 196 which is disposed to cooperate in turn with the four faces 195 of the cam extension 191. The leaf spring 196 is attached at 197 to the chassis 62 and extends transversely therefrom with its free end resiliently abutting against the cam extension 191. The leaf spring 196 continuously tends to hold the cam 181 in a position in which any of the four faces 195 of the cam extension 191 extends parallel to the leaf spring 196. Only when the billhook 66 forcefully causes the cam 181 to rotate, does the leaf spring 196 flex or bend to allow that rotation to take place. As the cam extension 191 is square in plan view, the cam 181 is rotated each time over precisely 90°. Thus, when no positive locking of the cam 181 is provided by the locking means 191—193, but is ideally required, the leaf spring 196 effectively prevents any inadvertent cam rotation.

This alternative arrangement with the leaf spring 196 may be further simplified by omitting the billhook extension 193, whereby the positioning of the cam 181 is then obtained solely by the cam extension 191 cooperating with the leaf spring 196.

**Claims**

1. A knotter comprising a twine holder (63) operable to hold, during a knot-tying operation, a primary portion (20) and a secondary portion (43) of twine (21) in which the knot is to be tied; a rotary billhook (66) rotatable about an axis to which it is inclined and being rotatable through a first and a second revolution during the knot-tying operation, the billhook being operable, during the first revolution, to position the primary and secondary portions (21, 43) of twine (21) relative to each other in preparation for the knot to be tied therein and operable, during the second revolution, to tie the knot in the primary and secondary portions (21, 43), the billhook (66) comprising two jaws (75, 78) capable of being opened and closed; and rotatable cam means (181) contactable by the billhook (66) during both the first and second revolutions, characterised in that the cam means (181) comprise a first contact surface (186) and a second contact surface (190) contactable by the billhook (66) during the first and second billhook revolutions, respectively, and the arrangement being such that when the first contact surface (186) is contacted by the billhook (66) during the first billhook revolution, the jaws (75, 78) of the latter remain closed and the cam means (181) are moved into a position ready for the second contact surface (190) to be contacted by the billhook (66) during the second billhook revolution, and, when the second contact surface (190) is contacted by the billhook (66) during the second billhook revolution, the jaws (75, 78) of the latter are opened and the cam means (181) are moved into the position ready for the first contact surface (186) to be contacted by the billhook (66) during the first billhook revolution of the subsequent knot-tying operation.

2. A knotter according to claim 1, characterised in that the cam means (181) are mounted for rotation about an axis offset from the billhook axis, and in that the first contact surface (186) of the cam means (181) is spaced at a shorter distance from the axis of rotation of the cam means (181) than the second contact surface (190) thereof.

3. A knotter according to claim 1, characterised in that the cam means (181) is generally square in plan view with one pair of opposed corners (185) being cut away such that, when either of the sections of the cam at these cut-away corners is contacted by the billhook, the jaws (75, 78) of the latter remain closed, and with the other pair of opposed corners (189) being arranged such that when either of them is contacted by the billhook (66), the jaws (75, 78) of the latter are opened, the arrangement further being such that any time the cam (181) is contacted by the billhook (66) the cam is rotated through 90°.

4. A knotter according to claim 3, characterised in that each of the cut-away corners (185) of the cam (181) has a working surface (186) contactable by the billhook (66), the working surface (186) being formed with a recess (187) to accommodate movement of the billhook (66) relative to the cam (181) without effecting any movement of the billhook jaws (75, 78) relative to each other.

5. A knotter according to claim 3 or 4, characterised in that each corner of said other pair of opposed corners (189) of the cam (181) has a recess (190) provided therein which positively locates the contacting portion (81) of the billhook (66) to ensure both opening of the billhook jaws (75, 78) and rotation of the cam (181) through 90°.

6. A knotter according to any of the preceding claims, characterised in that releasable locking means (191—193) are provided to lock the cam (181) against rotation at least during portions of the first and second revolutions of billhook rotation.

7. A knotter according to claim 6, characterised in that the locking means comprise an extension (191) on the cam (181) and an extension (193) on the billhook (66), the two extensions interacting at predetermined points in the first and second revolutions of the billhook.

8. A knotter according to claim 7, when appended to claim 3, characterised in that the cam extension (191) is square in plan view and the billhook extension (193) is of sector form having a flat face (194) engageable in turn with the four sides of the cam extension (191).

9. A knotter according to any of the preceding claims, characterised in that the cam (181) is mounted for rotation on a stub shaft (182) and is restrained from inadvertent rotation by spring means (184).

**Revendications**

1. Noueur comprenant un porte-ficelle (63) pouvant être actionné pour maintenir, pendant une opération de formation d'un noeud, un brin primaire (20) et un brin secondaire (43) de ficelle (21) avec lesquels un noeud doit être fait; une serpette rotative (66), pouvant tourner autour d'un axe sur lequel elle est inclinée et étant apte à effectuer une première et une seconde révolutions pendant l'opération de formation d'un noeud, la serpette pouvant être actionnée, pendant la première révolution, pour positionner les brins primaire et secondaire (20, 43) de ficelle (21) l'un par rapport à l'autre pour la préparation du noeud à former avec eux, et pouvant être actionnée, pendant la seconde révolution, pour lier le noeud dans les brins primaire et secondaire (21, 43), la serpette (66) comprenant deux mâchoires (75, 78) aptes à être ouvertes et fermées; et des éléments de came (181) aptes à tourner et à être touchés par la serpette (66) pendant la première ainsi que la seconde révolutions, caractérisé en ce que les éléments de came (181) comprennent une première surface de contact (186) et une seconde surface de contact (190) aptes à être touchées par la serpette (66) respectivement pendant la première et la seconde révolutions de la serpette, et l'agencement étant tel que lorsque la première surface de contact (186) est touchée par la serpette (66) pendant la première révolution de la serpette, les mâchoires (75, 78) de cette dernière demeurent fermées et les éléments de came (181) sont déplacés en une position prête pour que la seconde surface de contact (190) soit touchée par la serpette (66) pendant la seconde révolution de la serpette, et, lorsque la seconde surface de contact (190) est touchée par la serpette (66) pendant la seconde révolution de la serpette, les mâchoires (75, 78) de cette dernière sont ouvertes et les éléments de came (181) sont déplacés dans la position prête pour que la première surface de contact (186) soit touchée par la serpette (66) pendant la première révolution de la serpette au cours de l'opération consécutive de formation d'un noeud.

2. Noueur selon la Revendication 1, caractérisé en ce que les éléments de came (181) sont montés à rotation autour d'un axe décalé par rapport à l'axe de la serpette, et en ce que la première surface de contact (186) des éléments de came (181) est espacée d'une distance plus courte de l'axe de rotation des éléments de came (181) que la seconde surface de contact (190).

3. Noueur selon la Revendication 1, caractérisé en ce que les éléments de came (181) ont une forme générale carrée, vue en plan, une paire d'angles opposés (185) étant découpés de telle sorte que lorsque chacune des sections de la came à ces angles découpés, est touchée par la serpette, les mâchoires (75, 78) de celle-ci demeurent fermées, l'autre paire d'angles opposés (189) étant disposée de telle sorte que lorsque chacun d'eux est touché par la serpette (66), les mâchoires (75, 78) de celle-ci soient ouvertes, l'agencement étant en outre tel qu'à tout moment où la came (181) est touchée par la serpette (66), la came tourne de 90°.

4. Noueur selon la Revendication 3, caractérisé en ce que chacun des angles découpés (185) de la came (181) présente une surface active (186) pouvant être touchée par la serpette (66), la surface active (186) étant formée avec un renfoncement (187) permettre un déplacement de la serpette (66) par rapport à la came (181) sans qu'il se produise un quelconque déplacement des mâchoires (75, 78) de la serpette l'une par rapport à l'autre.

5. Noueur selon la Revendication 3 ou 4, caractérisé en ce que chaque angle de ladite autre paire d'angles opposés (189) de la came (181) présente un renfoncement (190) ménagé dans ceux-ci et destinée à déterminer la position de la partie de contact (81) de la serpette (66) de manière à assurer à la fois l'ouverture des mâchoires (75, 78) de la serpette et la rotation de la came (181) de 90°.

6. Noueur selon l'une quelconque des Revendications précédentes, caractérisé en ce que des organes de verrouillage libérables (191—193) sont prévus pour verrouiller la came (181) contre une rotation au moins pendant des parties des première et seconde révolutions de la serpette pendant sa rotation.

7. Noueur selon la Revendication 6, caractérisé en ce que les organes de verrouillage comprennent un prolongement (191) sur la came (181) et un prolongement (193) sur la serpette (66), les deux prolongements entrant mutuellement en action en des points déterminés des première et seconde révolutions de la serpette.

8. Noueur selon la Revendication 7 lorsqu'elle est rattachée à la Revendication 3, caractérisé en ce que le prolongement (191) de la came est carrée, vu en plan, et en ce que le prolongement (193) de la serpette est en forme de secteur ayant une face plate (194) pouvant venir en prise tour à tour avec les quatre côtés du prolongement (191) de la came.

9. Noueur selon l'une quelconque des Revendications précédentes, caractérisé en ce que la came (181) est montée à rotation sur un arbre tronqué (182) et est empêchée de subir une rotation par inadvertance par un moyen à ressort (184).

**Patentansprüche**

1. Ein Knoter mit einem Bindegarnhalter (63), der so betätigbar ist, daß er während eines Knotenknüpfvorganges einen primären Teil (20) und einen Sekundärteil (43) des Bindegarn (21), in dem der Knoten geknüpft werden soll, halten kann, mit einem rotierenden sensenförmig gebogenen Teil (66), das um eine Achse drehbar ist, gegenüber der es geneigt ist, und das während des Knotenknüpfvorganges über eine erste und eine zweite Umdrehung drehbar ist, wobei das sensenförmig gebogene Teil während der ersten Umdrehung die primären und sekundären Teie (21, 43) des Bindegarns (21) bezüglich einander anordnen kann, um den darin zu knüpfenden Knoten vorzubereiten, während es bei der zweiten Umdrehung so betätigbar ist, daß der Knoten in den primären und sekundären Teilen (21, 43) geknüpft wird, und wobei das sensenförmig gebogene Teil (66) zwei Klemmbacken (75, 78) aufweist, die geöffnet und geschlossen werden können, und mit drehbaren Nockeneinrichtungen (181), die mit dem sensenförmig gebogenen Teil (66) sowohl während der ersten als auch während der zweiten Umdrehung in Berührung kommen können, dadurch gekennzeichnet, daß die Nockeneinrichtungen (181) eine erste Kontaktoberfläche (186) und eine zweite Kontaktoberfläche (190) aufweisen, die mit dem sensenförmig gebogenen Teil (66) während der ersten bzw. zweiten Umdrehung dieses sensenförmigen Teils in Berührung kommen können, und daß die Anordnung derart ist, daß wenn die erste Kontaktoberfläche (186) während der ersten Umdrehung des sensenförmig gebogenen Teils (66) mit diesem in Berührung kommt, die Klemmbacken (75, 78) dieses sensenförmig bebogenen Teils geschlossen bleiben und die Nockeneinrichtungen (181) in eine Position bewegt werden, in der die zweite Kontaktoberfläche (190) für eine Berührung mit dem sensenförmig gebogenen Teil (66) während der zweiten Umdrehung des sensenförmig gebogenen Teils bereit sind, und daß, wenn die zweite Kontaktoberfläche (190) mit dem sensenförmig gebogenen Teil (66) während der zweiten Umdrehung des sensenförmig gebogenen Teils in Berührung kommt, die Klemmbacken (75, 78) des sensenförmig gebogenen Teils geöffnet werden und die Nockeneinrichtungen (181) in die Position bewegt werden, in der die erste Kontaktoberfläche (186) für eine Berührung mit dem sensenförmig gebogenen Teil (66) während der ersten Umdrehung dieses sensenförmig gebogenen Teils bei dem nachfolgenden Knotenknüpfvorgang bereit ist.

2. Knoter nach Anspruch 1, dadurch gekennzeichnet, daß die Nockeneinrichtungen (181) für eine Drehung um eine Achse befestigt sind, die gegenüber der Achse des sensenförmig gebogenen Teils versetzt ist, und daß die erste Kontaktoberfläche (186) der Nockeneinrichtungen (181) eine geringere Entfernung von der Drehachse der Nockeneinrichtungen (181) aufweist, als die zweite Kontaktoberfläche (190) der Nockeneinrichtungen (181).

3. Knoter nach Anspruch 1, dadurch gekennzeichnet, daß die Nockeneinrichtungen (181) in Draufsicht allgemein quadratisch sind, wobei ein Paar von gegenüberliegenden Ecken (185) derart weggeschnitten ist, daß wenn einer der Abschnitte des Nockens an diesen weggeschnittenen Ecken mit dem sensenförmig gebogenen Teil in Berührung kommt, dessen Klemmbacken (75, 78) geschlossen bleiben, während das andere paar von gegenüberliegenden Ecken (189) derart angeordnet ist, daß wenn eine hiervon mit dem sensenförmig gebogenen Teil (66) in Berührung kommt, dessen Klemmbacken (75, 78) geöffnet werden, wobei die Anordnung weiterhin derart ist, daß jedesmal dann, wenn der Nocken (181) mit dem sensenförmig gebogenen Teil (66) in Berührung kommt, der Nocken über 90° gedreht wird.

4. Knoter nach Anspruch 3, dadurch gekennzeichnet, daß jede der weggeschnittenen Ecken (185) des Nockens (181) eine Arbeitsoberfläche (186) aufweist, die mit dem sensenförmig gebogenen Teil (66) in Berührung kommen kann, daß die Arbeitsoberfläche (186) mit einer Ausnehmung (187) ausgebildet ist, um eine Bewegung des sensenförmig gebogenen Teils (66) gegenüber dem Nocken (181) zu ermöglichen, ohne daß eine Bewegung der Klemmbacken (75, 78) des sensenförmig gebogenen Teils gegeneinander hervorgerufen wird.

5. Knoter nach Anspruch 3 oder 4, dadurch gekennzeichnet, daß jede Ecke des anderen Paares von gegenüberliegenden Ecken (189) des Nockens (181) eine darin ausgebildete Ausnehmung (190) aufweist, die in eindeutiger Weise den Berührungsteil (81) des sensenförmig gebogenen Teils (66) festlegt, um sowohl das Öffnen der Klemmbacken (75, 78) des sensenförmig gebogenen Teils als auch eine Drehung des Nockens (181) über 90° sicherzustellen.

6. Knoter nach einem der vorhergehenden Ansprüche, dadurch gekennzeichnet, daß lösbare Verriegelungseinrichtungen (191—193) vorgesehen sind, die den Nocken (181) gegen eine Drehung während zumindestens Teilen der ersten und zweiten Umdrehungen der Drehung des sensenförmig gebogenen Teils verriegeln.

7. Knoter nach Anspruch 6, dadurch gekennzeichnet, daß die Verriegelungseinrichtungen einen Ansatz (191) an dem Nocken (181) und einen Ansatz (193) an dem sensenförmig gebogenen Teil (66) umfassen, und daß die beiden Ansätze an vorgegebenen Punkten der ersten und zweiten Umdrehungen des sensenförmig gebogenen Teils in Wechselwirkung treten.

8. Knoter nach Anspruch 7, in Verbindung mit Anspruch 3, dadurch gekennzeichnet, daß der Nockenansatz (191) in Draufsicht quadratisch ist und daß der Ansatz (193) des sensenförmig gebogenen Teils die Form eines Sektors mit einer ebenen Stirnfläche (194) aufweist, die ihrerseits mit den vier Seiten des Nockenansatzes (191) in Eingriff kommen kann.

9. Knoter nach einem der vorhergehenden Ansprüche, dadurch gekennzeichnet, daß der Nocken (181) auf einer Stummelwelle (182) drehbar befestigt ist und durch Federeinrichtungen (184) an einer ungewollten Drehung gehindert ist.

0 077 141

FIG.1

**FIG.2**

FIG.3

FIG.5

FIG.6

FIG.4

0 077 141

0°

81

78

75

193

195

191

190

181

188

184

183

182

66

76

186 187

101

**FIG.7**

90°

81

193

101

76

78

195

191

190

186

188

187

184

181

183

182

66

75

**FIG.8**

180°

101

76

66

75

193

195

191

190

78

81

181

186

188

187

184

182

183

**FIG.9**

270°

66

78

81

76

75

193

195

186

101

191

190

188

187

181

184

182

183

**FIG.10**

360°

78 81
75
66 193
195
191
186
187
190 181
188 184
183
76 182
101

**FIG.11**

450°

81 193
75 101
76
78 195
191
190
188 66
181 186
184 187
183
182

**FIG.12**

540°

101 76
66
193 75
78 195
81 191
190 186
188 187
181 184
183
182

**FIG.13**

66 630°
76 75
78
81
101
193 195 190
191
186 188
187
181
184 182
183

**FIG.14**

**FIG.15**